# EUROPÄISCHE PATENTANMELDUNG

(11) **EP 2 322 337 A1**
(43) Veröffentlichungstag der Anmeldung: **18.05.2011**
(21) Anmeldenummer: 10191267.3
(22) Anmeldetag: 15.11.2010
(51) Int. Cl.: B29C 44/08, C08J 9/32

(54) **Verfahren zum Herstellen von Gegenständen**

(30) Priorität: 15.11.2009 DE 102009044532
(71) Anmelder: Allgaier GmbH & Co. Besitz KG, 87484 Nesselwang (DE)
(72) Erfinder: Allgaier, Thomas, 87484, Nesselwang (DE)
(74) Vertreter: Hutzelmann, Gerhard

(57) **Zusammenfassung**

Verfahren zum Herstellen von Gegenständen, mit einer verhältnismäßig festen Kunststoff-Lage und wenigstens einer weiteren Lage aus geschäumtem Kunststoff, wobei zuerst die feste Kunststoff-Lage im Spritzgießverfahren hergestellt wird und dann in einer größeren oder einer vergrößerten Form die geschäumte Lage durch Einspritzen des aufschäumenden Kunststoffes erzeugt wird, wobei der geschäumten Lage vor dem eigentlichen Spritzgießvorgang Mikrohohlkugeln aus Kunststoff mit einer Treibgasfüllung zugeführt werden. Die geschäumte Lage kann aus einem Thermo-Plastischen-Elastomer (TPE) bestehen.

Die dem Kunststoff zugeführte Menge an Mikrohohlkugeln beträgt vorzugsweise 2,0 bis 10%.

## Beschreibung

Die Erfindung bezieht sich auf ein Verfahren zum Herstellen von Gegenständen, mit einer verhältnismäßig festen Kunststoff-Lage und wenigstens einer weiteren Lage aus geschäumtem Kunststoff, wobei zuerst die feste Kunststoff-Lage im Spritzgießverfahren hergestellt wird und dann in einer größeren oder einer vergrößerten Form die geschäumte Lage durch Einspritzen des aufschäumenden Kunststoffes erzeugt wird.

Aus der DE-AS 1 181 897 ist ein derartiges Verfahren bekannt, wobei in eine verstellbare Gießform Kunstharz eingespritzt wird, das beim Abkühlen verfestigt. Sodann wird die Form vergrößert und weiteres kornförmiges Material unter hohem Druck eingepresst. Bei entsprechender Temperatur und nachlassendem Druck schäumt das Material dann auf und füllt die Form aus.

Aufgrund des verwendeten Materials entsteht ein verhältnismäßig großporiger Schaumstoff.

Aus der DE 10 2007 021 750 A1 ist darüber hinaus ein Verfahren bekannt, bei dem ein physikalisches Treibmittel mit hohem Druck von über 180 bar bis über 350 bar in den plastifizierten Kunststoff eingepresst wird und dann beide zusammen in den Werkzeughohlraum eingepresst werden. Beim Expandieren des Werkzeughohlraumes schäumt dann die Kunststoffmasse auf.

Vorher kann in die Spritzgießform ein Träger-Teil eingebracht werden, auf den der geschäumte Kunststoffkörper aufgebracht wird.

Aus der DE 43 04 751 C2 ist es bekannt, zuerst in einer Spritzgießform ein massives Kunststoffteil herzustellen. Dann wird in in eine vergrößerte Form zusätzlich zum massiven Kunststoffteil eine schäumbare Masse aus thermoplastischem Kunststoff und chemisches Treibmittel eingespritzt. Die Form wird dann weiter vergrößert, wobei durch den einsetzenden Druckabfall sich das Treibmittel zersetzt und Gas freisetzt, welches das Aufschäumen des Kunststoffes bewirkt.

Alle bekannten Verfahren sind sehr aufwendig und haben negative Einwirkungen auf den zu schäumenden Kunststoff.

Der Erfindung liegt die Aufgabe zugrunde, ein Verfahren vorzuschlagen, das einfach durchzuführen ist und trotzdem ein sehr gutes Ergebnis liefert.

Diese Aufgabe wird erfindungsgemäß dadurch gelöst, dass der geschäumten Lage vor dem eigentlichen Spritzvorgang Mikrohohlkugeln aus Kunststoff mit einer Treibgasfüllung zugeführt werden.

Durch die Zumischung der Mikrohohlkugeln kann die Menge an Treibgas exakt an die Erfordernisse der Schaumlage angepasst werden.

Dabei hat es sich auch als sehr vorteilhaft erwiesen, wenn die geschäumte Lage aus einem Thermo-Plastischen-Elastomer (TPE) besteht.

TPEs sind sehr griffsympathisch und lassen sich gut aufschäumen.

Besonders vorteilhaft ist es gemäß einer Weiterbildung der Erfindung auch, wenn als Treibgas in den Mikrohohlkugeln ein gegenüber dem zu schäumenden Kunststoff wenigstens weitgehend inertes Gas eingesetzt wird.

Hierdurch werden unerwünschte Veränderungen des zu schäumenden Materials vermieden.

Eine weitere sehr vorteilhafte Ausgestaltung der Erfindung liegt auch vor, wenn die Mikrohohlkugeln direkt vor dem Eintritt in die Spritzgussform dem zu schäumenden Kunststoff zugesetzt werden.

Damit kann eine gezielte auch ungleichmäßige Verteilung der Mikrohohlkugeln im zu schäumenden Material erzielt werden.

Erfindungsgemäß ist es auch sehr vorteilhaft, wenn die Mikrohohlkugeln kurz vor oder in der Spritzgussform erweicht oder aufgeschmolzen werden, indem diese die Temperatur des zu schäumenden Kunststoffes annehmen.

Durch ein Erweichen oder Aufschmelzen der Mikrohohlkugeln kurz vor oder in der Spritzgussform wird zu einem genau definierten Zeitpunkt die Hohlkugel vergrößert und/oder das Schäumungsmittel freigesetzt. Durch den Druck im zu spritzenden Kunststoff wird verhindert, daß die Mikrohohlkugel vorzeitig aufplatzen und das Schäumungsmittel vorzeitig freisetzen.

Gemäß einer weiteren Fortbildung der Erfindung ist es auch sehr vorteilhaft, wenn für die Mikrohohlkugeln ein dem zu schäumenden Kunststoff identischer oder ähnlicher Kunststoff eingesetzt wird.

Damit wird eine sehr gute Verträglichkeit zwischen dem zu schäumenden Kunststoff und dem Material der Mikrohohlkugeln erreicht.

Äußerst vorteilhaft ist es erfindungsgemäß auch, wenn für die Mikrohohlkugeln ein gegenüber dem zu schäumenden Kunststoff bei höherer Temperatur schmelzender Kunststoff eingesetzt wird.

Damit kann auf einfache Art und Weise der Zeitpunkt der Expansion der Hohlkugeln und/oder der Freisetzung des Schäumungsmittels durch Steuerung der Temperatur der Schmelze festgelegt werden. Zusätzlich kann erreicht werden, daß sich erweichte, aber nicht geschmolzene Mikrohohlkugeln in der Spritzgussform zwar vergrößern, aber nicht aufplatzen.

Als besonders vorteilhaft hat es sich dabei erwiesen, wenn gemäß einer Ausgestaltung der Erfindung dem zu schäumenden Kunststoff 1,0 bis 10%, vorzugsweise 4,0 bis 5,0% Mikrohohlkugeln zugeführt werden.

Mit diesen geringen Mengen an Mikrohohlkugeln wird ein sehr gutes Aufschäumen des Kunststoffes, insbesondere eines Thermo-Plastischen-Elastomers erreicht.

Eine vorteilhafte weitere Ausgestaltung der Erfindung ist dadurch gekennzeichnet, dass die feste Kunststoff-Lage aus PP, PE, PA, ABS, PC, PC/ABS, POM oder anderen Thermoplasten oder dgl. hergestellt wird.

Damit wird erreicht, dass zum Einen eine hohe Festigkeit des erfindungsgemäß hergestellten Teils erzielt wird und zum Anderen eine stabile Verbindung zwischen massivem Abschnitt und geschäumter Lage erreicht wird.

Es hat sich erfindungsgemäß auch als sehr vorteilhaft erwiesen, wenn die Spritzgussform beim Einspritzen des zu schäumenden Materials vergrößert wird.

Dabei ist es äußerst vorteilhaft, wenn die Spritzgußform entsprechend dem eingespritzen Volumen vergrößert wird.

Damit wird ein wenigstens annähern konstanter Druck im eingespritzten Material aufrecht erhalten und damit ein vorzeitiges Aufschäumen durch Expansion bzw. Aufplatzen der Mikrohohlkugeln vermieden.

Eine weitere sehr vorteilhafte Ausgestaltung der Erfindung liegt auch vor, wenn die Spritzgußform nach dem Einspritzen des zu schäumenden Manterials vergrößert wird.

Damit wird zu einem definierten Zeitpunkt die Schäumung eingeleitet. Das Vergrößern der Spritzgußform sorgt für eine Verringerung des Drucks im eingespritzten, aber noch flüssigen Kunststoffmaterial. Durch diese Druckverringerung expandieren die Mikrohohlkugeln entweder durch reine Volumenvergößerung oder durch Aufplatzen.

Dabei hat es sich als äußerst vorteilhaft erwiesen, wenn die Spritzgußform soweit vergrößert wird, daß das zusätzliche Volumen dem Schäumungsvolumen entspricht.

Damit wird der Grad der Schäumung definiert. Es kann sehr genau festgelegt werden, wie stark die Mikrohohlkugeln expandieren. Es kann auf diese Art und Weise beispielsweise dafür gesorgt werden, daß eine sehr feine, aber homogen verteilte Aufschäumung stattfindet. Ebenso ist es möglich, eine großporigere Aufschäumung zu definieren. Dies alles ist reproduzierbar und großtechnisch einsetzbar.

Im folgenden wird die Erfindung anhand eines Ausführungsbeispiels veranschaulicht.

Als erster Schritt wird eine feste Kunststofflage in einer Spritzgießform hergestellt.

Diese kann beispielsweise aus PP, PE, PA, ABS, PC, PC/ABS, POM oder dergleichen bestehen.

Sodann wird - um Raum für eine geschäumte Lage zu schaffen - entweder die erste Spritzgießform entsprechend vergrößert, oder die feste Kunststofflage in eine größere

Form eingelegt. Ebenso ist es denkbar, daß ein Teil der Spritzgußform durch eine andere Form ersetzt wird.

Es ist auch denkbar, daß die Vergrößerung der Form genau in dem Maße erfolgt, in dem zu schäumendes Material eingespritzt wird.

Das zu schäumende Material, in diesem Ausführungsbeispiel ein Thermo-Plastisches-Elastomer, wird vor dem Einspritzen in die Spritzgießform mit den gasgefüllten Mikrohohlkugel vermischt und dann dieses Gemisch in den Hohlraum eingespritzt.

Durch weiteres Vergrößern des Hohlraumes wird das Gemisch zum Aufschäumen gebracht. Durch Abkühlen der Formwand wird dort eine geschlossene Schicht des entstehenden Schaumes erzielt, so dass eine geschlossene Oberfläche der geschäumten Lage entsteht. Bevor das Gemisch den Hohlraum erreicht, steht dieses durch den Einspritzvorgang selbst unter Druck, so daß in diesem Stadium ein Aufschäumen des Materials durch Vergrößern oder Aufplatzen der erweichten, angeschmolzenen oder geschmolzenen Mikrohohlkugeln verhindert wird. Erst wenn das Gemisch den Hohlraum erreicht und/oder dieser vergrößert wird, sinkt der innere Druck des Gemisches und der Aufschäumvorgang findet statt.

Durch das Abkühlen der Formwand kann auch eine ungleichmässige Schäumung erzeugt werden. Die näher an der Formwand gelegenen Mikrohohlkugeln werden früher in ihrer Expansion gestoppt als weiter innen liegende Hohlkugeln.

Das Maß der Expansion der Gießform und/oder der Temperaturerhöhung ist abhängig vom verwendeten Kunststoff und von den verwendeten Mikrohohlkugeln.

Es ist auch denkbar, daß die Mikrohohlkugeln erst direkt vor dem Eintritt des zu schäumenden Materials in die Spritzgußform dieser zugemischt werden. Die Mikrohohlkugeln können aber auch schon früher zum Beispiel einem Kunststoffgranulat zugemischt werden.

Desweiteren ist es denkbar, daß die Mikrohohlkugeln durch eine gezielte Temperaturerhöhung kurz vor der Spritzgießform erweicht und damit expandiert werden. Dabei kann auch die Viskosität des zu verarbeitenden Materials auf das zum Spritzen am besten geeignete Optimum eingestellt werden. Es ist auch denkbar, daß die Mirkohohlkugeln so weit erweicht bzw. aufgeschmolzen werden, daß diese das Treibgas freisetzen wird. Allerdings kann dann nicht immer eine geschlossenporige Schäumung sichergestellt werden. Zudem können dann Schlieren innerhalb des Materials durch das austretende Treibmittel entstehen, die bei einer reinen Expansion der Mikrohohlkugeln sicher vermieden werden.

Als Treibgas wird vorzugsweise ein gegenüber den Kunststoffen inertes Gas, wie beispielsweise Stickstoff eingesetzt. Andere Gase sind denkbar.

Der Anteil an Mikrohohlkugeln gegenüber dem zu schäumenden Kunststoff sollte zwischen 1,0 und 10%, vorzugsweise zwischen 4,0 und 5,0% betragen.

Bei diesen geringen Mengen Mikrohlkugeln wurden sehr gute, und feinporige Schäumungen erzielt.

Es ist auch denkbar, daß die Mikrohohlkugeln ungleichmäßig im zu schäumenden Material verteilt oder ungleichmässig stark expandiert werden, um beispielsweise einen stark geschäumten Kern und nur einen gering geschäumten Randbereich zu erzeugen. Gerade wenn der Randbereich nur gering geschäumt ist, lassen sehr gute und widerstandsfähige geschlossenporige Oberflächen erzeugen, die dennoch weich, elastisch und griffsympathisch sind.

Besonders gute Ergebnisse wurden erzielt, wenn die Mikrohohlkugeln bereits mit dem Kunststoffgranulat vermischt werden. Die Mikrohohlkugeln bestehen dabei aus einem bei höheren Temperaturen schmelzenden Material als das einzuspritzende Kunststoffmaterial. Beim Aufschmelzen des Kunststoffmaterials werden die Mikrohohlkugeln lediglich erweicht. Durch den während der Plastifizierung herrschenden Druck, der größer ist als der Innendruck in den Mikrohohlkugeln behalten die Mikrohohlkugeln ihre Form. Erst wenn die Kavität der Spritzgußform erweitert wird, expandieren die Mikrohohlkugeln und erzeugen so Hohlräume im zu schäumenden Material.

Um den Druck beim Einspritzen aufrecht zu erhalten, kann die Kavität entsprechend dem eingespritzten Material während des Einspritzvorganges vergrößert werden. Ebenso denkbar ist, daß die Kavität zunächst nur minimal vergrößert wird und dann während des Einspritzvorganges auf das Gesamtvolumen des einzuspritzenden Materials vergrößert wird. Durch diese Vergrößerung der Kavität während des Einspritzens wird eine vorzeitige Schäumung verhindert. Vielmehr kann sich das Material in der gesamten Kavität gleichmäßig verteilen. Erst dann, also sobald ein Großteil oder noch besser alles Material in die Kavität eingebracht ist, wird die Kavität weiter vergrößert. Durch diese weitere Vergrößerung sinkt der Druck im Material. Dadurch expandieren die Mikrohohlkugeln. Je nach Stärke dieser zweiten Vergrößerung der Kavität wird der Grad der Schäumung definiert.

Da aber während der Schäumung kein weiteres Material mehr eingespritzt werden muss, wird einerseits eine sehr gleichmäßige Schäumung erzielt und andererseits eine Schlierenbildung verhindert.

Gerade die Bildung von Schlieren im geschäumten Material, die oftmals durch unterschiedliche Schäumung entsteht und auch durch Strömungseffekte im geschäumten Material ist ein erheblicher Nachteil von bekannten Verfahren zur physikalischen Schäumung von Kunststoffmaterialien. Diese werden durch das vorliegende erfindungsgemäße Verfahren vermieden.

Mit der erfindungsgemäßen Methode lassen sich Griffstücke aber auch Sitzoberflächen schaffen, die angenehm zu benutzen, aber dennoch widerstandsfähig sind.

Zum Beispiel ist es denkbar, daß Sitzflächen für Badelifte oder dergleichen mit dem erfindungsgemäßen Verfahren hergestellt werden.

## Patentansprüche

1. Verfahren zum Herstellen von Gegenständen, mit einer verhältnismäßig festen Kunststoff-Lage und wenigstens einer weiteren Lage aus geschäumtem Kunststoff, wobei zuerst die feste Kunststoff-Lage im Spritzgießverfahren hergestellt wird und dann in einer größeren oder einer vergrößerten Form die geschäumte Lage durch Einspritzen des aufschäumenden Kunststoffes erzeugt wird, **dadurch gekennzeichnet, dass** der geschäumten Lage vor dem eigentlichen Spritzgießvorgang Mikrohohlkugeln aus Kunststoff mit einer Treibgasfüllung zugeführt werden.

2. Verfahren nach Anspruch 1, **dadurch gekennzeichnet, daß** die geschäumte Lage aus einem Thermo-Plastischen-Elastomer (TPE) besteht.

3. Verfahren nach Anspruch 1 oder 2, **dadurch gekennzeichnet, daß** als Treibgas in den Mikrohohlkugeln ein gegenüber dem zu schäumenden Kunststoff wenigstens weitgehend inertes Gas eingesetzt wird.

4. Verfahren nach Anspruch 1, 2 oder 3, **dadurch gekennzeichnet, daß** die Mikrohohlkugeln direkt vor dem Eintritt in die Spritzgussform dem zu schäumenden Kunststoff zugesetzt werden.

5. Verfahren nach einem der vorangehenden Ansprüche, **dadurch gekennzeichnet, daß** die Mikrohohlkugeln kurz vor oder in der Spritzgussform erweicht oder aufgeschmolzen werden, indem diese die Temperatur des zu schäumenden Materials annehmen.

6. Verfahren nach einem der vorangehenden Ansprüche, **dadurch gekennzeichnet, daß** für die Mikrohohlkugeln ein dem zu schäumenden Kunststoff identischer oder ähnlicher Kunststoff eingesetzt wird.

7. Verfahren nach einem der vorangehenden Ansprüche, **dadurch gekennzeichnet, daß** für die Mikrohohlkugeln ein gegenüber dem zu schäumenden Kunststoff bei höherer Temperatur schmelzender Kunststoff eingesetzt wird.

8. Verfahren nach einem der vorangehenden Ansprüche, **dadurch gekennzeichnet, dass** dem zu schäumenden Kunststoff 1,0 bis 10%, vorzugsweise 4,0 bis 5,0% Mikrohohlkugeln zugeführt werden.

9. Verfahren nach einem der vorangehenden Ansprüche, **dadurch gekennzeichnet, dass** die feste Kunststoff-Lage aus PP, PE, PA, PC, PC/ABS, POM oder anderem Thermoplasten oder dgl. hergestellt wird.

10. Verfahren nach einem der vorangehenden Ansprüche, **dadurch gekennzeichnet, daß** die Spritzgussform beim Einspritzen des zu schäumenden Materials vergrößert wird.

11. Verfahren nach Anspruch 10, **dadurch gekennzeichnet, daß** die Spritzgußform entsprechend dem eingespritzen Volumen vergrößert wird.

12. Verfahren nach einem der vorangehenden Ansprüche, **dadurch gekennzeichnet, daß** die Spritzgußform nach dem Einspritzen des zu schäumenden Manterials vergrößert wird.

13. Verfahren nach Anspruch 12, **dadurch gekennzeichnet, daß** die Spritzgußform soweit vergrößert wird, daß das zusätzliche Volumen dem Schäumungsvolumen entspricht.
